# EUROPÄISCHE PATENTANMELDUNG

(11) **EP 0 769 765 A1**
(43) Veröffentlichungstag der Anmeldung: **23.04.1997**
(21) Anmeldenummer: 95116625.5
(22) Anmeldetag: 21.10.1995
(51) Int. Cl.: G07F 1/06, G06K 19/077

(54) **Identifikationsträger zur Zugangs- oder Berechtigungskontrolle**

(71) Anmelder: SCHEIDT & BACHMANN GMBH, D-41238 Mönchengladbach (DE)
(72) Erfinder: Miller, Gert Dr., D-41063 Mönchengladbach (DE)
(74) Vertreter: Stenger, Watzke & Ring Patentanwälte

(57) **Zusammenfassung**

Ein Identifikationsträger zur Zugangs- oder Berechtigungskontrolle ist mit einem Gehäuse, einem darin angeordneten, von außen berührungslos speicher- und lesbaren Chip (2) zum zumindest vorläufigen Abspeichern von Kenngrößen sowie Zeitgrößen im Rahmen der Zugangs- oder Berechtigungskontrolle, sowie mit einer an oder in dem Gehäuse angeordneten Antenne für den berührungslosen Informations- und Datenaustausch zwischen dem Chip (2) und einer externen Lese- und Schreibstation versehen. Um einen Identifikationsträger zu schaffen, der wiederverwendbar und daher langfristig kostengünstig, gut handhabbar und ferner aufgrund seiner Gestalt in definierter Lage und Ausrichtung durch eine Lese- und Schreibstation führbar ist, wird vorgeschlagen, daß das Gehäuse achsensymmetrisch gestaltet ist. Der Identifikationsträger soll sich insbesondere zur Verwendung im Rahmen eines automatisierten Parkhaussystems eignen, jedoch auch für andere Anwendungen auf dem Gebiet der Zugangs- oder Berechtigungskontrolle einsetzbar sein.

## Beschreibung

Die Erfindung betrifft einen Identifikationsträger zur Zugangs- oder Berechtigungskontrolle mit einem Gehäuse, einem darin angeordneten, von außen berührungslos speicher- und lesbaren Chip zum zumindest vorläufigen Abspeichern von Kenngrößen sowie Zeitgrößen im Rahmen einer automatisch überwachten Zugangs- oder Berechtigungskontrolle, und einer an oder in dem Gehäuse angeordneten Antenne für den berührungslosen Informations- und Datenaustausch zwischen dem Chip und einer externen Lese- und Schreibstation.

Im Rahmen von Zugangs- oder Berechtigungskontrollen, etwa in einem Parkhaus, werden Identifikationsträger verwendet, die aus einer rechteckigen Karte bestehen, auf der vor der Ausgabe mit maschinenlesbaren Zeichen die Einfahrtzeit markiert wird. Dies erfolgt in der Praxis zumeist mittels eines auf der Karte aufgetragenen, magnetisierbaren Streifens. Bekannt ist jedoch auch der Einsatz eines speicher- und lesbaren Chips innerhalb der Karte, um so zumindest vorläufig Kenngrößen sowie Zeitgrößen im Rahmen der automatisch überwachten Zugangs- oder Berechtigungskontrolle maschinenlesbar abzuspeichern.

Derartige, mit einem programmierbaren Chip versehene Karten sind wiederverwendbar und können daher für mehrere, aufeinanderfolgende Parkvorgänge benutzt werden. Für die wiederholte Ein- und Ausgabe der Karten sind in dem Parkhaus entsprechend vorbereitete Ein- und Ausfahrtkontrollstationen vorgesehen, die die auszugebenden Karten lagern, einer Schreib- und Lesestation zuführen und über geeignete Kanäle dem Parkhausbenutzer zugänglich machen. Innerhalb der Ein- und Ausfahrtstationen müssen die Karten Transportwege zurücklegen, wofür bei den bekannten rechteckigen Karten im allgemeinen Transportbänder oder Transportrollen verwendet werden. Wegen des häufigen Verkantens dieser Karten während des Transportes ist jedoch die Störanfälligkeit groß, zumal derartige Karten nur in einer bestimmten Lage gelesen bzw. neu programmiert werden können. Die flache Gestaltung der Karte bedingt überdies eine Gestaltung der darin angeordneten Antenne, die sich für ein allseitiges Abstrahlen der mit der externen Lese- und Schreibstation ausgetauschten Informationssignale nur eingeschränkt eignet.

Der Erfindung liegt die **Aufgabe** zugrunde, einen Identifikationsträger zur Zugangs- oder Berechtigungskontrolle zu schaffen, der wiederverwendbar und daher langfristig kostengünstig, gut handhabbar und ferner aufgrund seiner Gestalt in definierter Lage und Ausrichtung durch eine Lese- und Schreibstation führbar ist. Der Identifikationsträger soll sich insbesondere zur Verwendung im Rahmen eines automatisierten Parkhaussystems eignen, jedoch auch für andere Anwendungen auf dem Gebiet der Zugangs- oder Berechtigungskontrolle einsetzbar sein.

Zur **Lösung** wird bei einem Identifikationsträger der eingangs genannten Art vorgeschlagen, daß das Gehäuse achsensymmetrisch gestaltet ist.

Die Achsensymmetrie erlaubt es, den Identifikationsträger in eine exakte Lage und Ausrichtung zu der externen Lese- und Schreibstation zu bringen.

Ferner wird vorgeschlagen, daß das Gehäuse rotationssymmetrisch gestaltet ist, wodurch sich eine Rollfähigkeit des Identifikationsträgers ergibt und die Handhabungsvorteile einer runden Form weitgehend ausgeschöpft werden können. Ein solcher rotationssymmetrischer Identifikationsträger ist infolge seiner Wiederverwendbarkeit langfristig sehr preiswert, und zudem besonders gut stapelbar. Er ist außerdem stabil und unterliegt nur einem sehr geringen Verschleiß.

Im Rahmen der Anwendung etwa in einem Parkhaus erhält jeder Identifikationsträger eine individuelle Kennzeichnung oder eine Identifikationsgröße, so daß mittels des Identifikationsträgers von einer zugeordneten Datenverarbeitungseinheit des Parksystems die Parkgebühren in Abhängigkeit von der Einfahrtzeit und der Parkdauer berechnet werden können. Die Identifikationsgröße sowie eine Zeitgröße werden in dem Chip des Identifikationsträgers abgespeichert, so daß innerhalb des Parkhauses die Ein- und Ausfahrtstation sowie die Zahlstation unabhängig voneinander betrieben werden können und eine Vernetzung dieser Stationen nicht erforderlich ist. Es sind daher sehr individuelle und variable Parkhauslösungen möglich.

Gemäß einer Ausführungsform der Erfindung ist das Gehäuse mit zwei jeweils nach außen gewölbten Halbschalen versehen, die halbkugelförmig gestaltet sein können. Insbesondere können sich die Halbschalen zu einer Kugel ergänzen und zusammensteckbar oder miteinander verschraubbar sein.

Der Vorteil einer Kugel besteht in deren sehr gutem Rollverhalten, wozu einerseits die runde Umfangsfläche und zum anderen das relativ hohe Gewicht der Kugel beiträgt. Durch die Verwendung von zwei Halbschalen wird ferner eine günstige Anordnung der Antenne des Identifikationsträgers mit guter Rundumabstrahlung möglich.

Die Führung während des Abrollens kann noch zusätzlich verbessert werden, indem eine Umfangsnut in der Verbindungsebene der beiden Halbschalen angeordnet wird. Alternativ hierzu wird ein Ring in der Verbindungsebene der beiden Halbschalen vorgeschlagen, wobei die Umfangsfläche des Rings über die Mantelfläche der Halbschalen hinausragen kann, und damit eine Führungsfunktion während des Abrollens des Identifikationsträgers übernimmt.

Der zwischen den Halbschalen angeordnete Ring eignet sich in besonderer Weise dazu, darin die Antenne für den berührungslosen Informations- und Datenaustausch zwischen dem Chip und der externen Lese- und Schreibstation unterzubringen. Eine solche Antenne arbeitet mit einem relativ großen Durchmesser, und weist daher ein sehr gutes Abstrahlverhalten auf.

Weitere Einzelheiten und Vorteile werden nachfolgend anhand der zugehörigen Zeichnung erläutert, auf der mehrere Ausführungsbeispiele eines erfindungsgemäßen Identifikationsträgers dargestellt sind. Im einzelnen zeigen:
- Fig. 1: in einer Seitenansicht einen Identifikationsträger mit einem aus zwei halbkugelförmigen Schalen zusammengesetzten Gehäuse;
- Fig. 2: einen der Fig. 1 ähnlichen Informationsträger unter Verwendung einer Nut;
- Fig. 3a: einen Identifikationsträger mit einem allseitig überstehenden Ring;
- Fig. 3b: den Informationsträger gemäß Fig. 3a in einer anderen Seitenansicht;
- Fig. 4: einen im Vergleich zu den Figuren 3a und 3b modifizierten Identifikationsträger;
- Fig. 5a: einen Identifikationsträger in Gestalt eines Stabes in Stirnansicht;
- Fig. 5b: den Identifikationsträger gemäß Fig. 5a in einer Seitenansicht;
- Fig. 6a: einen Identifikationsträger in Gestalt einer Münze mit polygoner Umfangsfläche in Seitenansicht;
- Fig. 6b: den Identifikationsträger gemäß Fig. 6a in einer Stirnansicht;
- Fig. 7a: einen Identifikationsträger in Gestalt einer Münze mit elliptischer Umfangsfläche in einer Seitenansicht und
- Fig. 7b: den Identifikationsträger gemäß Fig. 7a in einer Stirnansicht.

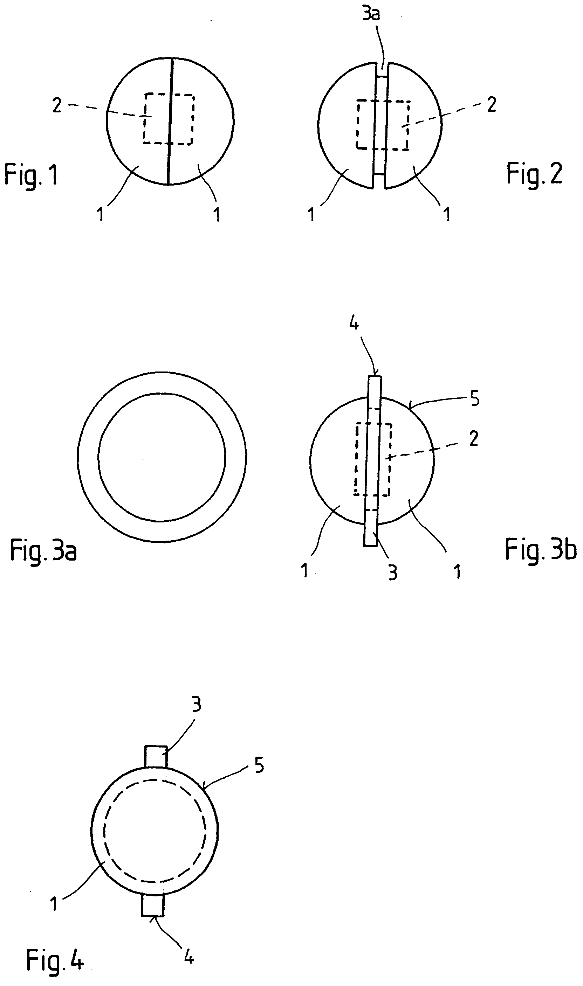

Der in Fig. 1 dargestellte Identifikationsträger besteht aus zwei Halbschalen 1, die jeweils die Gestalt einer Halbkugel aufweisen, und sich insgesamt zu einer Kugel ergänzen. Die beiden Halbschalen bestehen aus einem schlagfesten Kunststoff und lassen sich mittels nicht dargestellter Verbindungselemente ineinanderstecken oder miteinander verschrauben. Innerhalb der Halbschalen 1 befindet sich ein Hohlraum, in den ein berührungslos speicher- und lesbarer Chip 2 eingesetzt ist. Derartige Chips werden auch als Transponder bezeichnet. Der Chip 2 ist mit einer Antenne versehen, über die ein berührungsloser Informations- und Datenaustausch zwischen dem Chip 2 und einer externen Lese- und Schreibstation erfolgt.

Die in den Figuren 1 und 2 dargestellten Identifikationsträger zeichnen sich durch ein sehr gutes Rollverhalten aus, wofür zum einen die runde Gestalt, und zum anderen das relativ hohe Gewicht des aus den beiden Halbschalen 1 zusammengesetzten Identifikationsträgers verantwortlich ist. Eine Verwechslung des so gestalteten Identifikationsträgers mit anders gestalteten und insbesondere kartenförmigen oder münzförmigen Identifikationsträgern ist so gut wie ausgeschlossen. Ferner ist durch die Verwendung zweier nahezu identischer Halbschalen eine besonders kostengünstige Herstellung möglich. Zum Transport des Identifikationsträgers innerhalb einer Schreib- und Leseeinheit eignet sich eine zylindrische Röhre, in der der Identifikationsträger in genau definierter Lage rollen kann. Hierdurch ergibt sich eine gute Lagebestimmung sowie ein allseitiges Abstrahlverhalten der eingebauten Antenne. Gemäß Fig. 2 kann sich in der Ebene zwischen den beiden Halbschalen 1 eine umlaufende Nut 3a befinden, die die seitliche Führung des Identifikationsträgers beim Abrollen verbessert.

Bei dem Ausführungsbeispiel gemäß den Figuren 3a und 3b befindet sich die Antenne in einem Ring 3, der zwischen den beiden Halbschalen 1 angeordnet ist. Der Durchmesser der Antenne entspricht daher nahezu dem Außendurchmesser des Identifikationsträgers, wodurch sich ein besonders gutes Abstrahl- und Empfangsverhalten der Antenne während des Datenaustausches mit der externen Lese- und Schreibstation einstellt. Insbesondere kann der Ring 3 selbst die Antenne sein; in diesem Fall ist der aus einem geeigneten Metall bestehende Ring 3 mit einer Unterbrechung versehen, die den elektrischen Kurzschluß der beiden Enden der Rundantenne verhindert.

Bei der in den Figuren 3a und 3b dargestellten Ausführungsform weist der Ring 3 einen vergrößerten Außendurchmesser auf. Die Umfangsfläche 4 des Rings 3 ragt also über die Mantelfläche 5 der Halbschalen 1 hinaus. Ein solcher vergrößerter Ring 3 kann eine zusätzliche Führungsfunktion während des Abrollens des Identifikationsträgers durch eine Röhre übernehmen. Der Identifikationsträger läßt sich auf diese Weise in eine genau definierte Ausrichtung zu der externen Lese- und Schreibstation bringen.

In der Figur 4 ist ein weiteres Ausführungsbeispiel eines Identifikationsträgers mit einem über den Umfang der Halbschalen 1 hinausragenden Ring 3 dargestellt. Auch hier kann der Ring 3 zugleich die Funktion der mit dem Chip 2 verbundenen Antenne übernehmen. Da der Ring 3 in diesem Fall aus Metall besteht, führt er ferner zu einer Verstärkung und Verschleißminderung des Identifikationsträgers.

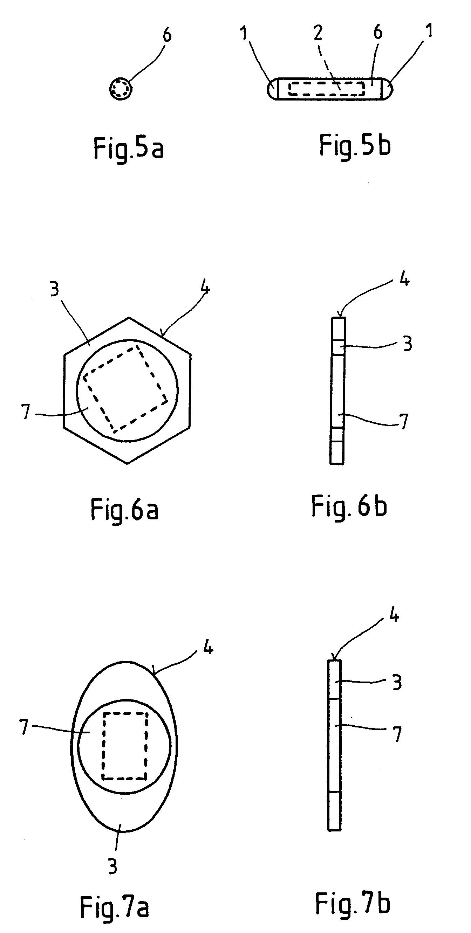

Die in den Figuren 5a und 5b dargestellte Ausführungsform weist die Gestalt eines länglichen Stabes auf, der sich aus den beiden Halbschalen 1 sowie einem dazwischen angeordneten, zylindrischen Gehäuseabschnitt 6 zusammensetzt. Der Durchmesser des zylindrischen Gehäuseabschnittes 6 ist gleich dem Durchmesser der Halbschalen 1. Dieser Identifikationsträger kann sowohl rollend innerhalb eines flachen Kanals transportiert werden als auch in Längsrichtung der Stabform, wodurch sich dieser Identifikationsträger auch für einen Transport in Kanälen mit sehr geringem Querschnitt eignet. Er ist ferner auf kleinstem Raum stapelbar.

Die in den Figuren 6a bis 7b dargestellten Identifikationsträger weisen ein ebenfalls achsensymmetrisches Gehäuse auf, welches jedoch in Gestalt einer flachen Münze geformt ist. Bei der Ausführungsform gemäß den Figuren 6a und 6b weist die Umfangsfläche 4 die Gestalt eines gleichmäßigen Polygons mit sechs Ecken auf, bei der Ausführungsform gemäß Figuren 7a und 7b die Gestalt einer Ellipse, wobei eine ovale Gestaltung ebenso möglich ist.

In allen in den Figuren 6a bis 7b dargestellten Fällen besteht der Identifikationsträger aus einem Kern 7 aus Kunststoff mit dem darin angeordneten Chip 2 sowie dem Ring 3, welcher vorzugsweise aus Metall besteht und in diesem Fall wiederum als Rundantenne dienen kann.

Die in den Figuren 6a bis 7b dargestellten Ringe 3 können auch anstelle der bei den Ausführungsvarianten der Figuren 3a bis 4 verwendeten, kreisrunden Ringe 3 eingesetzt werden.

Bei Verwendung der Identifikationsträger innerhalb eines automatischen Parksystems werden in dem Datenspeicher des Chips 2 z.B. folgende Größen abgespeichert: Kenngröße für das jeweilige Parkhaus, Kenngröße bezüglich des Parkhausbetreibers, laufende Nummer des jeweiligen Identifikationsträgers, Einfahrtzeit in das Parkhaus, Karenzzeit zwischen Zahlvorgang und spätestem Zeitpunkt, zu dem das Parkhaus ohne Gebührenzuschlag verlassen werden kann. Die genannten Daten und eventuell weitere Daten lassen sich mittels der externen Lese- und Schreibstation beliebig ändern, überschreiben oder löschen.

### Bezugszeichenliste

- 1: Halbschale
- 2: Chip
- 3: Ring
- 3a: Umfangsnut
- 4: Umfangsfläche des Rings
- 5: Mantelfläche
- 6: zylindrischer Gehäuseabschnitt
- 7: Kern

## Patentansprüche

1. Identifikationsträger zur Zugangs- oder Berechtigungskontrolle mit einem Gehäuse, einem darin angeordneten, von außen berührungslos speicher- und lesbaren Chip (2) zum zumindest vorläufigen Abspeichern von Kenngrößen sowie Zeitgrößen im Rahmen einer automatisch überwachten Zugangs- oder Berechtigungskontrolle, und einer an oder in dem Gehäuse angeordneten Antenne (3) für den berührungslosen Informations- und Datenaustausch zwischen dem Chip (2) und einer externen Lese- und Schreibstation,
**dadurch gekennzeichnet**,
daß das Gehäuse achsensymmetrisch gestaltet ist.

2. Identifikationsträger nach Anspruch 1, dadurch gekennzeichnet, daß das Gehäuse rotationssymmetrisch gestaltet ist.

3. Identifikationsträger nach Anspruch 1 oder Anspruch 2, dadurch gekennzeichnet, daß das Gehäuse mit zwei jeweils nach außen gewölbten Halbschalen (1) versehen ist.

4. Identifikationsträger nach Anspruch 3, dadurch gekennzeichnet, daß die Halbschalen (1) halbkugelförmig gestaltet sind.

5. Identifikationsträger nach Anspruch 4, dadurch gekennzeichnet, daß sich die Halbschalen (1) zu einer Kugel ergänzen.

6. Identifikationsträger nach einem der Ansprüche 3 bis 5, dadurch gekennzeichnet, daß die Halbschalen (1) zusammensteckbar oder miteinander verschraubbar sind.

7. Identifikationsträger nach Anspruch 3 oder Anspruch 4, dadurch gekennzeichnet, daß die Halbschalen (1) über einen zylindrischen Gehäuseabschnitt (6) verbunden sind, dessen Durchmesser gleich dem Durchmesser der Halbschalen (1) ist (Figuren 5a, 5b).

8. Identifikationsträger nach einem der Ansprüche 3 bis 6, gekennzeichnet durch eine Umfangsnut (3a) in der Verbindungsebene der beiden Halbschalen (Fig. 2).

9. Identifikationsträger nach einem der Ansprüche 3 bis 6, gekennzeichnet durch einen Ring (3) in der Verbindungsebene der beiden Halbschalen (1), wobei die Umfangsfläche (4) des Rings (3) über die Mantelfläche (5) der Halbschalen (1) hinausragt.

10. Identifikationsträger nach Anspruch 9, dadurch gekennzeichnet, daß die Umfangsfläche (4) des Rings (3) kreisrund ist.

11. Identifikationsträger nach einem der Ansprüche 9 und 10, dadurch gekennzeichnet, daß sich die Antenne in dem Ring (3) befindet.

12. Identifikationsträger nach einem der Ansprüche 9 bis 11, dadurch gekennzeichnet, daß der Ring (3) überwiegend aus Metall besteht, und daß die Halbschalen (1) aus Kunststoff bestehen.

13. Identifikationsträger nach Anspruch 1, dadurch gekennzeichnet, daß das Gehäuse die Gestalt einer flachen Münze mit einer Umfangsfläche (4) in Gestalt eines gleichmäßigen Polygons aufweist (Fig. 6a,6b).

14. Identifikationsträger nach Anspruch 1, dadurch gekennzeichnet, daß das Gehäuse die Gestalt einer flachen Münze mit einer elliptischen oder ovalen Umfangsfläche (4) aufweist (Fig. 7a,7b).
